# EUROPEAN PATENT APPLICATION

(11) **EP 4 447 217 A1**
(43) Date of publication of application: **16.10.2024**
(21) Application number: 24166174.3
(22) Date of filing: 26.03.2024
(51) Int. Cl.: H01M 50/509, H01M 50/55, H01M 50/553, H01M 50/209, H01M 50/211, H01M 50/514

(54) **BATTERY MODULE AND ELECTRICAL DEVICE**

(30) Priority: 31.03.2023 CN 202310339301
(71) Applicant: Xiamen Ampack Technology Limited, Xiamen City, Fujian Province 361000 (CN)
(72) Inventor: HUANG, Tao, Xiamen City, Fujian Province, People s Republic of China, 361000 (CN)
(74) Representative: Icosa

(57) **Abstract**

A battery module includes a plurality of first cells and a plurality of second cells arranged alternately along a first direction. A first electrode terminal of the first cell protrudes out from a part of the first cell and at least partially extends along a direction opposite to the first direction, the part being away from the first side; and a second electrode terminal protrudes out from a part of the first cell and at least partially extends along the first direction, the part being away from the first side. Both a third electrode terminal and a fourth electrode terminal of the second cell protrude out from a part of the second cell and at least partially extend along the first direction, the part being away from the second side. The third electrode terminal is connected to the first electrode terminal of the first cell that is adjacent to the second cell and farther away from the first side than the second cell. The fourth electrode terminal is connected to the second electrode terminal of the first cell that is adjacent to the second cell and farther away from the second side than the second cell.

## Description

### TECHNICAL FIELD

This application relates to the technical field of energy storage, and in particular, to a battery module and an electrical device.

### BACKGROUND

Currently, with the development and popularization of electrical devices, the electrical devices are being miniaturized gradually. How to downsize a battery module applied in an electrical device without compromising sufficiency of the capacity has become an urgent problem to be solved. In the related art, electrode terminals of some thin batteries protrude from a side close to the battery along a thickness direction of the battery. When a plurality of batteries are stacked in sequence, a distance between adjacent batteries is short, and the electrode terminals of the plurality of batteries are prone to interfere with each other and be hardly placeable, and in turn, hardly connectable.

### SUMMARY

In view of the above situation, this application provides a battery module that facilitates connection of an electrode terminal.

Some embodiments of this application provide a battery module. The battery module includes a plurality of first cells and a plurality of second cells arranged alternately along a first direction. The battery module has a first side and a second side opposite to each other along the first direction. Each first cell includes a first housing, a first electrode assembly, a first electrode terminal, and a second electrode terminal. The first electrode assembly is disposed in the first housing. The first electrode terminal includes a first part and a second part connected to each other. The first part is connected to the first electrode assembly. The first part protrudes out of the first housing from a part of the first cell, the part being away from the first side. The first part extends along a second direction perpendicular to the first direction. Along the first direction, the second part extends toward the first side from the first part. The second electrode terminal includes a third part and a fourth part connected to each other. The third part is connected to the first electrode assembly. The third part protrudes out of the first housing from a part of the first cell, the part being away from the first side. The third part extends along the second direction. Along the first direction, the fourth part extends toward the second side from the third part. Each second cell includes a second housing, a second electrode assembly, a third electrode terminal, and a fourth electrode terminal. The third electrode terminal includes a fifth part and a sixth part connected to each other. The fifth part is connected to the second electrode assembly. The fifth part protrudes out of the second housing from a part of the second cell, the part being away from the second side. The fifth part extends along the second direction. Along the first direction, the sixth part extends toward the second side from the fifth part, and is connected to a second part of the first cell that is adjacent to the second cell and farther away from the first side than the second cell. The fourth electrode terminal includes a seventh part and an eighth part connected to each other. The seventh part is connected to the second electrode assembly. The seventh part protrudes out of the second housing from a part of the second cell, the part being away from the second side. The seventh part extends along the second direction. Along the first direction, the eighth part extends toward the second side from the seventh part, and is connected to a fourth part of the first cell that is adjacent to the second cell and farther away from the second side than the second cell.

In the above embodiment, the sixth part is connected to the second part of the first cell that is adjacent to the second cell and farther away from the first side than the second cell. The eighth part is connected to the fourth part of the first cell that is adjacent to the second cell and farther away from the second side than the second cell. The above arrangement increases the distance between the first electrode terminal and the third electrode terminal that correspond to the second part and the sixth part respectively, where the second part and the sixth part extend in opposite directions and are connected to each other, thereby improving the stability of connection between the first electrode terminal and the third electrode terminal. The above arrangement also decreases the distance, along the first direction, between the second electrode terminal and the fourth electrode terminal that correspond to the fourth part and the eighth part respectively, where the fourth part and the eighth part extend in the same direction and are connected to each other, thereby facilitating decrease of the overall length of the second electrode terminal and the fourth electrode terminal that are connected together, and in turn, facilitating connection of the second electrode terminal and the fourth electrode terminal.

In some embodiments, among any one first cell and one second cell adjacent to the first cell in the first direction, along the second direction, a distance between the fourth part and the second housing is greater than a distance between the eighth part and the second housing. Viewed along the second direction, the fourth part covers at least a part of the eighth part.

In the above embodiment, the fourth part covers at least a part of the eighth part, thereby increasing the area of a junction between the fourth part and the eighth part, and in turn, increasing the firmness of the connection between the second electrode terminal and the fourth electrode terminal.

In some embodiments, viewed along the second direction, the eighth part includes a first region covered by the fourth part and an exposed second region.

In the above embodiment, the eighth part includes a first region covered by the fourth part and an exposed second region, thereby facilitating equalization of the length of the fourth part along the first direction and the length of the eighth part along the first direction, improving structural consistency between the second electrode terminal and the fourth electrode terminal, and in turn, facilitating the processing of the second electrode terminal and the fourth electrode terminal.

In some embodiments, the second region includes a first sub-region. The first sub-region and the first region are arranged along a third direction. The third direction, the first direction, and the second direction are perpendicular to each other.

In the above embodiment, the first sub-region favorably supports the fourth part.

In some embodiments, the second region further includes a second sub-region. The second sub-region is closer to the second side than the first region.

In the above embodiment, the second sub-region is located on a side of the first region in the first direction, thereby facilitating equalization of the length of the fourth part along the first direction and the length of the eighth part along the first direction, improving structural consistency between the second electrode terminal and the fourth electrode terminal, and in turn, facilitating the processing of the second electrode terminal and the fourth electrode terminal.

In some embodiments, among any one second cell and one first cell adjacent to the second cell in the first direction, along the second direction, a distance between the sixth part and the second housing is greater than a distance between the second part and the second housing. Viewed along the second direction, the sixth part covers at least a part of the second part.

In the above embodiment, the sixth part covers at least a part of the second part, thereby increasing the area of a junction between the sixth part and the second part, and in turn, increasing the firmness of the connection between the first electrode terminal and the third electrode terminal.

In some embodiments, the second part includes a third region covered by the sixth part as well as an exposed third sub-region and an exposed fourth sub-region. The third sub-region and the third region are arranged along the third direction. Along the first direction, the fourth sub-region is closer to the second side than the third region. An area of the fourth sub-region is greater than an area of the second sub-region.

In the above embodiment, the area of the fourth sub-region is greater than the area of the second sub-region, thereby facilitating equalization of the lengths of the second part, the fourth part, the sixth part, and the eighth part in the first direction, improving structural consistency between the first electrode terminal, the second electrode terminal, the third electrode terminal, and the fourth electrode terminal, and in turn, enhancing the processing efficiency of the first electrode terminal, the second electrode terminal, the third electrode terminal, and the fourth electrode terminal. In addition, the area of the second sub-region is less than the area of the fourth sub-region, thereby increasing the area available on the eighth part for supporting the fourth part, increasing the area of a junction between the eighth part and the fourth part, and in turn, increasing the firmness of the connection between the second electrode terminal and the fourth electrode terminal.

In some embodiments, viewed along the second direction, the sixth part covers at least a part of the second part. The second part includes a third region covered by the sixth part and an exposed fourth sub-region. Along the first direction, the fourth sub-region is closer to the second side than the third region. An area of the fourth sub-region is greater than an area of the second sub-region.

In the above embodiment, the area of the second sub-region is less than the area of the fourth sub-region, thereby increasing the area available on the eighth part for supporting the fourth part, increasing the area of a junction between the eighth part and the fourth part, and in turn, increasing the firmness of the connection between the second electrode terminal and the fourth electrode terminal.

In some embodiments, among any one first cell and one second cell adjacent to the first cell in the first direction, a part of the fourth part is apart from the eighth part.

In the above embodiment, a part of the fourth part is apart from the eighth part, thereby facilitating separation of the third part from the eighth part, and in turn, reducing the risk that the third part touches and abrades the second seal edge portion, and reducing the risk that the eighth part touches and abrades the first seal edge portion.

In some embodiments, among any one second cell and one first cell adjacent to the second cell in the first direction, along the second direction, a distance between the sixth part and the second housing is greater than a distance between the second part and the second housing. Viewed along the second direction, the sixth part covers at least a part of the second part.

In the above embodiment, the sixth part covers at least a part of the second part, thereby increasing the area of a junction between the second part and the sixth part, and in turn, increasing the stability of the connection between the first electrode terminal and the third electrode terminal.

In some embodiments, viewed along the second direction, the second part includes a third region covered by the sixth part and an exposed fourth region.

In the above embodiment, the second part includes a third region covered by the sixth part and an exposed fourth region, thereby facilitating equalization of the length of the sixth part along the first direction and the length of the second part along the first direction, improving structural consistency between the third electrode terminal and the first electrode terminal, and in turn, facilitating the processing of the third electrode terminal and the first electrode terminal.

In some embodiments, the fourth region includes a third sub-region. The third sub-region and the third region are arranged along a third direction. The third direction, the first direction, and the second direction are perpendicular to each other.

In the above embodiment, the third sub-region favorably supports the sixth part.

In some embodiments, the fourth region further includes a fourth sub-region. Along the first direction, the fourth sub-region is closer to the second side than the third region.

In the above embodiment, the fourth sub-region is located on a side of the third region in the first direction, thereby facilitating equalization of the length of the sixth part along the first direction and the length of the second part along the first direction, improving structural consistency between the third electrode terminal and the first electrode terminal, and in turn, facilitating the processing of the third electrode terminal and the first electrode terminal.

In some embodiments, the second part of one first cell is connected to the sixth part of one adjacent second cell to form a first connecting portion, and the fourth part of one first cell is connected to the eighth part of one adjacent second cell to form a second connecting portion.

In some embodiments, the battery module further includes a circuit board and a plurality of connecting terminals connected to the circuit board. The circuit board is located between the first connecting portion and the second connecting portion; each first connecting portion is connected to one of the connecting terminals; and each second connecting portion is connected to one of the connecting terminals.

In the above embodiment, the circuit board is connected to the first connecting portion and the second connecting portion through a plurality of connecting terminals, thereby reducing the size of the circuit board, reducing the overall weight of the battery module, saving the material cost, and reducing the difficulty of assembling the circuit board.

In some embodiments, a symmetry axis of one first connecting portion extending along the first direction is apart from a symmetry axis of another first connecting portion extending along the first direction.

The above embodiment facilitates placement of the first electrode terminal and the third electrode terminal.

In some embodiments, a symmetry axis of one first connecting portion extending along the first direction coincides with a symmetry axis of another first connecting portion extending along the first direction.

The above embodiment reduces the space occupied by each first connecting portion in the third direction.

In some embodiments, viewed along the first direction, one first connecting portion at least partially overlaps another first connecting portion.

The above embodiment reduces the space occupied by each first connecting portion in the third direction.

In some embodiments, a symmetry axis of one second connecting portion extending along the first direction is apart from a symmetry axis of another second connecting portion extending along the first direction.

The above embodiment facilitates placement of the second electrode terminal and the fourth electrode terminal.

In some embodiments, a symmetry axis of one second connecting portion extending along the first direction coincides with a symmetry axis of another second connecting portion extending along the first direction. The above embodiment reduces the space occupied by each second connecting portion in the third direction.

In some embodiments, viewed along the first direction, one second connecting portion at least partially overlaps another second connecting portion.

The above embodiment reduces the space occupied by each second connecting portion in the third direction.

In some embodiments, at least one structural component is disposed between one first cell and one second cell adjacent to the first cell in the first direction. Any one first cell is in contact with one second cell adjacent to the first cell in a direction opposite to the first direction.

The arrangement in the above embodiment makes it convenient to omit the structural component between any one first cell and one second cell adjacent to the first cell in a direction opposite to the first direction, thereby reducing the overall size of the battery module in contrast to the practice in which a structural component is disposed between any adjacent first cell and second cell.

In some embodiments, a first insulation layer is disposed between any one third part and one seventh part adjacent to the third part along a direction opposite to the first direction. A second insulation layer is disposed between any one fifth part and one first part adjacent to the fifth part along the direction opposite to the first direction.

In the above embodiment, the first insulation layer reduces the risk of a short circuit caused by the contact of the first electrode terminal and the third electrode terminal that are apart from each other. The second insulation layer reduces the risk of a short circuit caused by the contact of the second electrode terminal and the fourth electrode terminal that are apart from each other.

In addition, this application further provides an electrical device that facilitates downsizing.

Some embodiments of this application provide an electrical device. The electrical device includes the battery module disclosed in any one of the foregoing embodiments.

In the above embodiment, the difficulty of connecting the battery module is reduced, and the demand for foam is decreased, thereby facilitating miniaturization of the electrical device.

The battery module in this application includes a plurality of first cells and a plurality of second cells that are arranged alternately along the first direction. The above implementation of a plurality of first cells and a plurality of second cells makes it convenient to increase the distance between the first electrode terminal and the third electrode terminal that correspond to the second part and the sixth part respectively, where the second part and the sixth part extend in opposite directions and are connected to each other, thereby facilitating connection between the first electrode terminal and the third electrode terminal. The above implementation also makes it convenient to decrease the distance between the second electrode terminal and the fourth electrode terminal that correspond to the fourth part and the eighth part respectively, where the fourth part and the eighth part extend in the same direction and are connected to each other, thereby facilitating decrease of the overall length of the second electrode terminal and the fourth electrode terminal that are connected together, and in turn, facilitating connection of the second electrode terminal and the fourth electrode terminal.

### BRIEF DESCRIPTION OF DRAWINGS

FIG. 1 is a schematic structural diagram of a battery module according to an embodiment of this application;
FIG. 2 is a cross-sectional schematic view of a battery module shown in FIG. 1 sectioned along a section line A-A;
FIG. 3 is a close-up view of a part B shown in FIG. 2;
FIG. 4 is a schematic structural diagram of a first cell according to an embodiment of this application;
FIG. 5 is a schematic mounting diagram of a first cell shown in FIG. 4;
FIG. 6 is a schematic structural diagram of a second cell according to an embodiment of this application;
FIG. 7 is a schematic mounting diagram of a second cell shown in FIG. 6;
FIG. 8 is a partial cross-sectional view of a battery module in which a first electrode terminal and a third electrode terminal are visible according to an embodiment of this application;
FIG. 9 is a partial cross-sectional view of a battery module in which a second electrode terminal and a fourth electrode terminal are visible according to an embodiment of this application;
FIG. 10 is a top view of a battery module according to an embodiment of this application;
FIG. 11 is a schematic structural diagram of a battery module according to an embodiment of this application;
FIG. 12 is a top view of a battery module according to an embodiment of this application;
FIG. 13 is a top view of a battery module according to an embodiment of this application;
FIG. 14 is a top view of a battery module according to an embodiment of this application;
FIG. 15 is a schematic diagram of a battery module according to an embodiment of this application; and
FIG. 16 is a schematic diagram of an electrical device according to an embodiment of this application.

List of reference numerals:
battery module 100
first side 101
second side 102
first cell 10
first housing 11
first main portion 111
first seal edge portion 112
first packaging portion 113
second packaging portion 114
first electrode assembly 12
first electrode terminal 13
first part 131
second part 132
third region 1321
fourth region 1322
third sub-region 132a
fourth sub-region 132b
first connecting portion 133
second electrode terminal 14
third part 141
fourth part 142
second connecting portion 143
first end 15
second end 16
second cell 20
second housing 21
second main portion 211
second seal edge portion 212
third packaging portion 213
fourth packaging portion 214
second electrode assembly 22
third electrode terminal 23
fifth part 231
sixth part 232
fourth electrode terminal 24
seventh part 241
eighth part 242
first region 2421
second region 2422
first sub-region 242a
second sub-region 242b
third end 25
fourth end 26
shell 304
first shell portion 30
second shell portion 40
accommodation cavity 34
circuit board 50
first terminal 51
second terminal 52
peripheral component 53
connecting terminal 60
structural component 70
first insulation layer 80
second insulation layer 90
electrical device 1000
first direction X
second direction Y
third direction Z

### DETAILED DESCRIPTION OF EMBODIMENTS

The following describes the technical solutions in some embodiments of this application with reference to the drawings hereof. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. The terms such as "top", "bottom", "up", "down", "left", "right", "front", and "back" and other similar expressions used herein are merely for ease of description.

The term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

It is hereby noted that a parameter described as being greater than, equal to, or less than a specified endpoint value means that the endpoint value allows for a tolerance of ±10%. For example, the statement that A is greater than B by 10 covers the case that A is greater than B by 9 and the case that A is greater than B by 11.

Unless otherwise expressly specified, the term "a plurality of" as used herein means two or more.

Unless otherwise defined, all technical and scientific terms used herein bear the same meanings as what is normally understood by a person skilled in the technical field of this application. The terms used in the specification of this application are merely intended to describe specific embodiments but not to limit this application.

This application discloses a battery module. The battery module includes a plurality of first cells and a plurality of second cells arranged alternately along a first direction. The battery module has a first side and a second side opposite to each other along the first direction. Each first cell includes a first housing, a first electrode assembly, a first electrode terminal, and a second electrode terminal. The first electrode assembly is disposed in the first housing. The first electrode terminal includes a first part and a second part connected to each other. The first part is connected to the first electrode assembly. The first part protrudes out of the first housing from a part of the first cell, the part being away from the first side. The first part extends along a second direction perpendicular to the first direction. Along the first direction, the second part extends toward the first side from the first part. The second electrode terminal includes a third part and a fourth part connected to each other. The third part is connected to the first electrode assembly. The third part protrudes out of the first housing from a part of the first cell, the part being away from the first side. The third part extends along the second direction. Along the first direction, the fourth part extends toward the second side from the third part. Each second cell includes a second housing, a second electrode assembly, a third electrode terminal, and a fourth electrode terminal. The third electrode terminal includes a fifth part and a sixth part connected to each other. The fifth part is connected to the second electrode assembly. The fifth part protrudes out of the second housing from a part of the second cell, the part being away from the second side. The fifth part extends along the second direction. Along the first direction, the sixth part extends toward the second side from the fifth part, and is connected to a second part of the first cell that is adjacent to the second cell and farther away from the first side than the second cell. The fourth electrode terminal includes a seventh part and an eighth part connected to each other. The seventh part is connected to the second electrode assembly. The seventh part protrudes out of the second housing from a part of the second cell, the part being away from the second side. The seventh part extends along the second direction. Along the first direction, the eighth part extends toward the second side from the seventh part, and is connected to a fourth part of the first cell that is adjacent to the second cell and farther away from the second side than the second cell.

The sixth part is connected to the second part of the first cell that is adjacent to the second cell and farther away from the first side than the second cell. The eighth part is connected to the fourth part of the first cell that is adjacent to the second cell and farther away from the second side than the second cell. The above arrangement increases the distance between the first electrode terminal and the third electrode terminal that correspond to the second part and the sixth part respectively, where the second part and the sixth part extend in opposite directions and are connected to each other, thereby facilitating the connection between the first electrode terminal and the third electrode terminal. The above arrangement also decreases the distance between the second electrode terminal and the fourth electrode terminal that correspond to the fourth part and the eighth part respectively, where the fourth part and the eighth part extend in the same direction and are connected to each other, thereby facilitating decrease of the overall length of the second electrode terminal and the fourth electrode terminal that are connected together, and in turn, facilitating connection of the second electrode terminal and the fourth electrode terminal.

The following describes some embodiments of this application with reference to drawings. To the extent that no conflict occurs, the following embodiments and the features in the embodiments may be combined with each other.

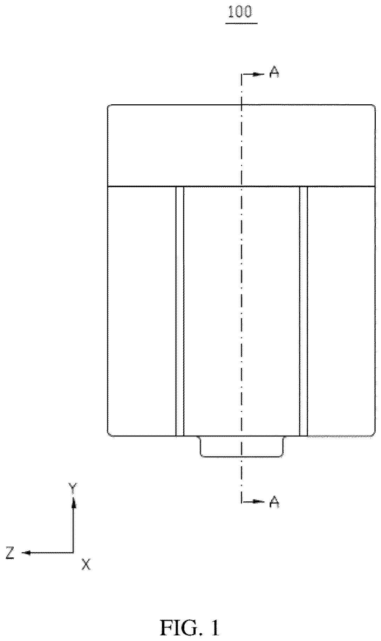

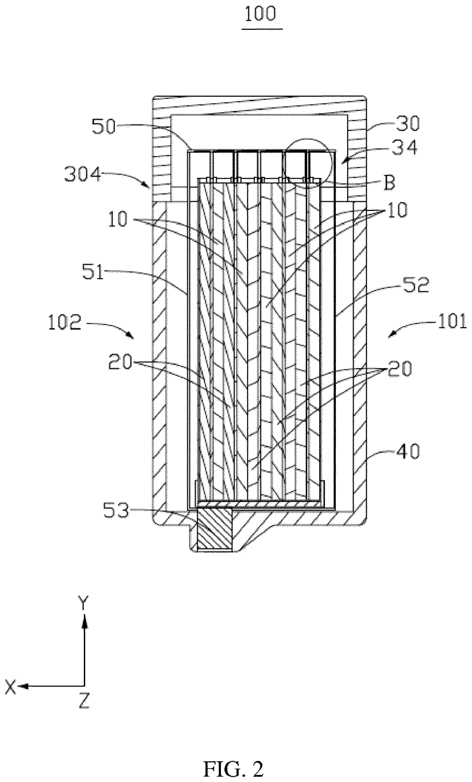

Referring to FIG. 1 and FIG. 2, an embodiment of this application provides a battery module 100. The battery module 100 includes a plurality of first cells 10 and a plurality of second cells 20. The plurality of first cells 10 and the plurality of second cells 20 are stacked along the first direction X and arranged alternately. The battery module 100 has a first side 101 and a second side 102 that are opposite to each other along the first direction X.

In some embodiments, referring to FIG. 2, the battery module 100 further includes a shell 304. The shell 304 includes a first shell portion 30 and a second shell portion 40. The first shell portion 30 is connected to the second shell portion 40. The first shell portion 30 and the second shell portion 40 fit together to form an accommodation cavity 34. The accommodation cavity 34 is configured to accommodate a plurality of first cells 10 and a plurality of second cells 20.

In some embodiments, the first shell portion 30 and the second shell portion 40 may be connected to each other by snap-fitting, bonding, welding, or screwing. The connection manner is not particularly limited herein.

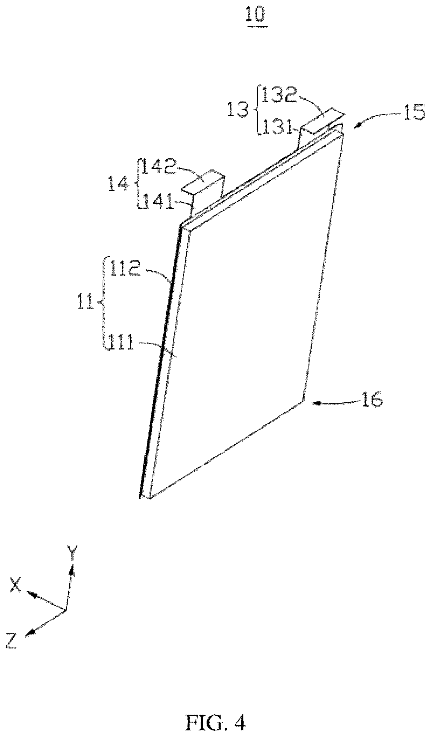

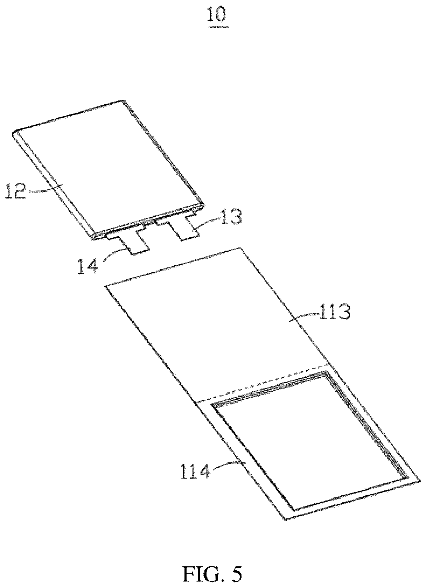

Referring to FIG. 4 and FIG. 5, each first cell 10 includes a first housing 11, a first electrode assembly 12, a first electrode terminal 13, and a second electrode terminal 14. The first electrode assembly 12 is disposed inside the first housing 11. Both the first electrode terminal 13 and the second electrode terminal 14 are connected to the first electrode assembly 12, and at least partially protrude out of the first housing 11.

In some embodiments, referring to FIG. 4 and FIG. 5, the first housing 11 includes a first main portion 111 and a first seal edge portion 112. The first main portion 111 is configured to accommodate the first electrode assembly 12. The first seal edge portion 112 extends outward from the circumference of the first main portion 111. The first housing 11 includes a first packaging portion 113 and a second packaging portion 114. A side of the first packaging portion 113 is connected to a side of the second packaging portion 114. The first packaging portion 113 and the second packaging portion 114 are folded toward each other along a junction in between until the circumference of the first packaging portion 113 touches the circumference of the second packaging portion 114. The non-contact part of the first packaging portion 113 and the non-contact part of the second packaging portion 114 form a first main portion 111. The circumference of the contact part of the first packaging portion 113 is hermetically connected to the circumference of the contact part of the second packaging portion 114 to form a first seal edge portion 112.

In some embodiments, along the first direction X, the first seal edge portion 112 extends outward from a lateral portion of the first main portion 111, the lateral portion being away from the first side 101.

In some embodiments, the first packaging portion 113 and the second packaging portion 114 may be made of an aluminum laminated film, so that the first housing 11 is an aluminum laminated film packaging bag.

In some other embodiments, the first packaging portion 113 and the second packaging portion 114 may be made of a non-metal material such as plastic, rubber, or a carbon fiber composite material, or made of a metal material such as copper, iron, or aluminum alloy. The first packaging portion 113 and the second packaging portion 114 may be made of the same material or different materials.

In some embodiments, the first electrode assembly 12 includes a positive electrode plate, a negative electrode plate, and a separator located between the positive electrode plate and the negative electrode plate. The positive electrode plate, the negative electrode plate, and the separator are stacked and wound.

The positive electrode plate is formed by coating a metal layer with a positive active material. The negative electrode plate is formed by coating a metal layer with a negative active material. An electrode plate of a different polarity is made of a metal layer of a different material. The positive active material may be one or more of lithium nickel cobalt manganese oxide, lithium cobalt oxide, lithium iron phosphate, lithium manganese oxide, lithium manganese iron phosphate, a cobalt-free material, or a sodium-ion material. The negative active material may be one or more of artificial graphite, natural graphite, or a silicon material.

As an example, the positive electrode plate is formed by coating an aluminum metal layer with a positive active material, and the negative electrode plate is formed by coating a copper metal layer with a negative active material.

In some embodiments, the separator is an insulating film material such as a polyethylene film, a polypropylene film, a polyester film, or a polyimide film, so as to serve a function of isolation between the positive electrode plate and the negative electrode plate.

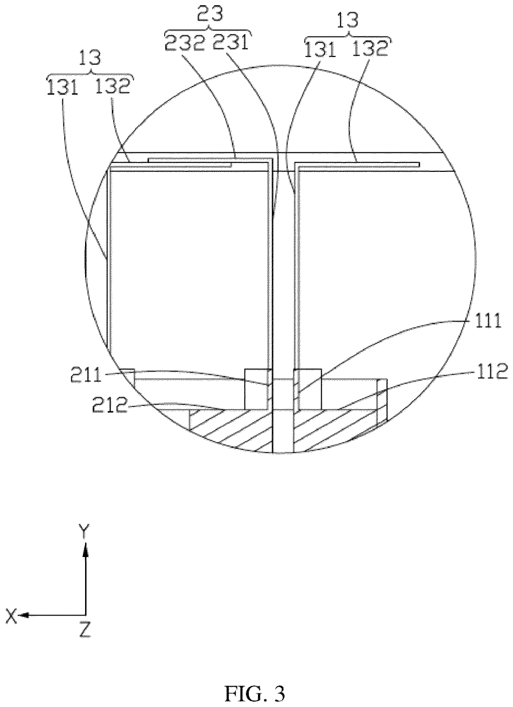

In some embodiments, referring to FIG. 2 to FIG. 4, the first electrode terminal 13 includes a first part 131 and a second part 132 connected to each other. The first part 131 is connected to the positive electrode plate of the first electrode assembly 12. The first part 131 protrudes out of the first housing 11 from a part of the first cell 10, the part being away from the first side 101. The first part extends along a second direction Y perpendicular to the first direction X. Along the first direction X, the second part 132 extends toward the first side 101 from the first part 131.

In some embodiments, referring to FIG. 4, the second electrode terminal 14 includes a third part 141 and a fourth part 142 connected to each other. The third part 141 is connected to the negative electrode plate of the first electrode assembly 12. The third part 141 protrudes out of the first housing 11 from a part of the first cell 10, the part being away from the first side 101. The third part extends along the second direction Y. Along the first direction X, the fourth part 142 extends toward the second side 102 from the third part 141.

In some embodiments, referring to FIG. 4, both the first part 131 and the third part 141 protrude out of the first housing 11 from the first seal edge portion 112, and extend along the second direction Y. Along the second direction Y, the first cell 10 includes a first end 15 and a second end 16 opposite to each other. Both the first part 131 and the third part 141 protrude out of the first housing 11 from the first seal edge portion 112 of the first end 15.

In some embodiments, the material of the first part 131 is the same as the material of the second part 132, and the material of the first part 131 is the same as the material of the positive electrode plate, so that the material of the first electrode terminal 13 is the same as the material of the positive electrode plate. The material of the third part 141 is the same as the material of the fourth part 142, and the material of the third part 141 is the same as the material of the negative electrode plate, so that the material of the second electrode terminal 14 is the same as the material of the negative electrode plate.

In some other embodiments, the material of the first part 131 is the same as the material of the second part 132, the first part 131 is connected to the negative electrode plate of the first electrode assembly 12, the material of the third part 141 is the same as the material of the fourth part 142, and the third part 141 is connected to the positive electrode plate of the first electrode assembly 12. In this way, the material of the first electrode terminal 13 is the same as the material of the negative electrode plate, and the material of the second electrode terminal 14 is the same as the material of the positive electrode plate. The first part 131 and the third part 141 protrude out of the first housing 11 from the first seal edge portion 112 of the second end 16.

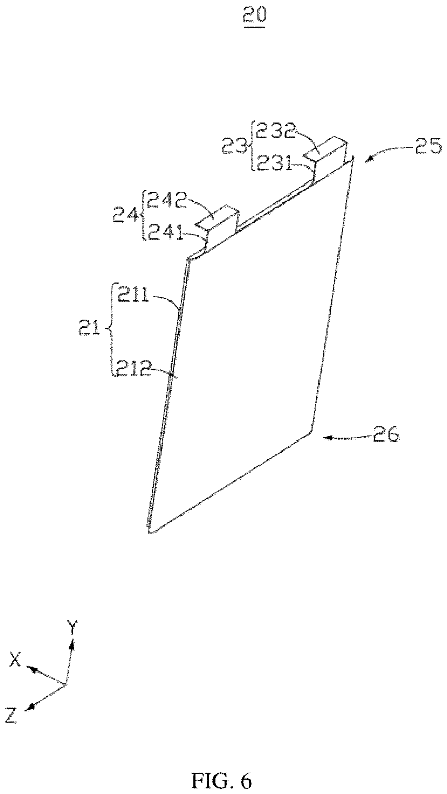

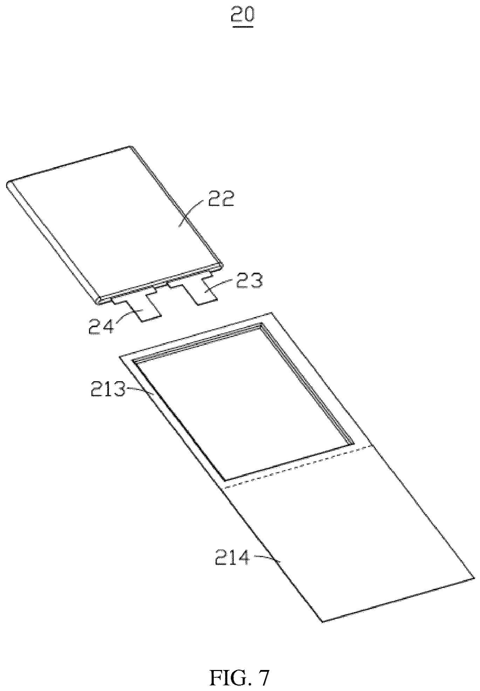

Referring to FIG. 6 and FIG. 7, each second cell 20 includes a second housing 21, a second electrode assembly 22, a third electrode terminal 23, and a fourth electrode terminal 24. The second electrode assembly 22 is disposed inside the second housing 21. Both the third electrode terminal 23 and the fourth electrode terminal 24 are connected to the second electrode assembly 22, and at least partially protrude out of the second housing 21.

In some embodiments, referring to FIG. 6 and FIG. 7, the second housing 21 includes a second main portion 211 and a second seal edge portion 212. The second main portion 211 is configured to accommodate the second electrode assembly 22. The second seal edge portion 212 extends outward from the circumference of the second main portion 211. The second housing 21 includes a third packaging portion 213 and a fourth packaging portion 214. A side of the third packaging portion 213 is connected to a side of the fourth packaging portion 214. The third packaging portion 213 and the fourth packaging portion 214 are folded toward each other along a junction in between until the circumference of the third packaging portion 213 touches the circumference of the fourth packaging portion 214. The non-contact part of the third packaging portion 213 and the non-contact part of the fourth packaging portion 214 form a first main portion 111. The circumference of the contact part of the third packaging portion 213 is hermetically connected to the circumference of the contact part of the fourth packaging portion 214 to form a second seal edge portion 212.

In some embodiments, along the first direction X, the second seal edge portion 212 extends outward from a part of the second main portion 211, the part being away from the second side 102.

In some embodiments, the third packaging portion 213 and the fourth packaging portion 214 may be made of an aluminum laminated film, so that the second housing 21 is an aluminum laminated film packaging bag.

In some other embodiments, the third packaging portion 213 and the fourth packaging portion 214 may be made of a non-metal material such as plastic, rubber, or a carbon fiber composite material, or made of a metal material such as copper, iron, or aluminum alloy. The third packaging portion 213 and the fourth packaging portion 214 may be made of the same material or different materials.

In some embodiments, the second electrode assembly 22 includes a positive electrode plate, a negative electrode plate, and a separator located between the positive electrode plate and the negative electrode plate. The positive electrode plate, the negative electrode plate, and the separator are stacked and wound. The specific structure of the second electrode assembly 22 may be learned by reference to the above description about the implementation of the first electrode assembly 12, the details of which are omitted here.

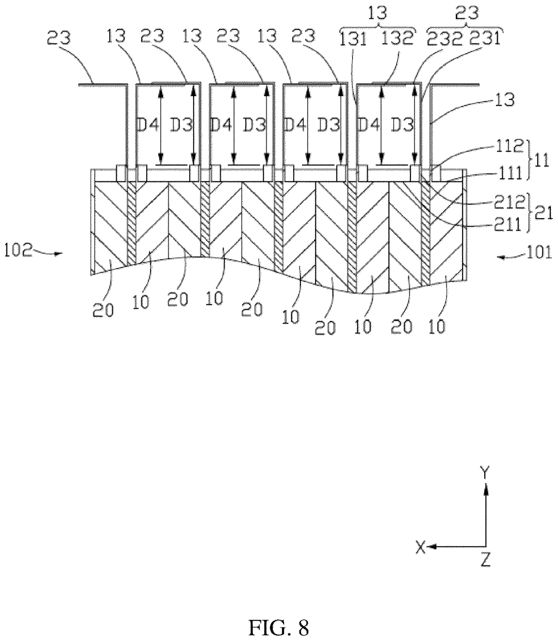

In some embodiments of this application, referring to FIG. 6 and FIG. 8, the third electrode terminal 23 includes a fifth part 231 and a sixth part 232 connected to each other. The fifth part 231 is connected to the negative electrode plate of the second electrode assembly 22. The fifth part 231 protrudes out of the second housing 21 from a part of the second cell 20, the part being away from the second side 102. The fifth part 231 extends along the second direction Y. Along the first direction X, the sixth part 232 extends toward the second side 102 from the fifth part 231. Along the first direction X, the sixth part 232 is connected to the second part 132 of the first cell 10 that is adjacent to the second cell 20 and farther away from the first side 101 than the second cell 20. The implementation of this embodiment makes it convenient to increase the distance between the first part 131 and the fifth part 231 that correspond to the connected first electrode terminal 13 and third electrode terminal 23 respectively, and restricts the overall length of the connected first electrode terminal 13 and third electrode terminal 23 from exceeding the length of two cells along the first direction X, thereby facilitating the placement of the first electrode terminal 13 and the third electrode terminal 23, reducing the risk of mutual interference, and in turn, facilitating the connection between the first electrode terminal 13 and the third electrode terminal 23.

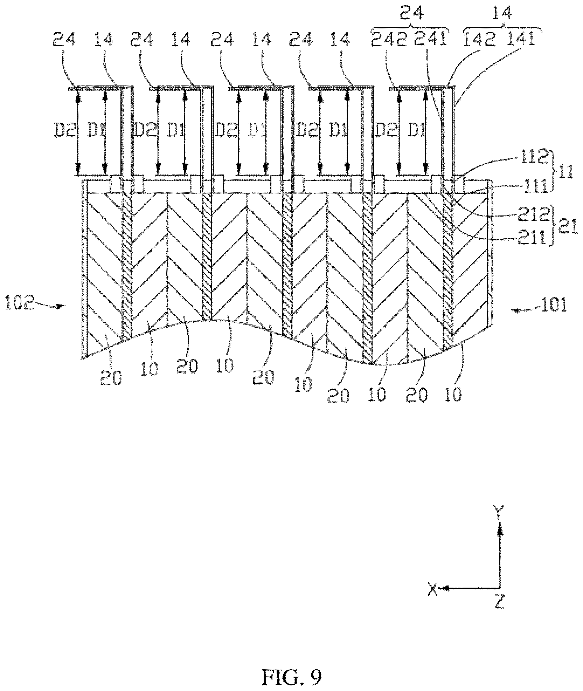

In some embodiments of this application, referring to FIG. 6 and FIG. 9, the fourth electrode terminal 24 includes a seventh part 241 and an eighth part 242 connected to each other. The seventh part 241 is connected to the positive electrode plate of the second electrode assembly 22. The seventh part 241 protrudes out of the second housing 21 from a part of the second cell 20, the part being away from the second side 102. The seventh part 241 extends along the second direction Y. Along the first direction X, the eighth part 242 extends toward the second side 102 from the seventh part 241. Along the first direction X, the eighth part 242 is connected to the fourth part 142 of the first cell 10 that is adjacent to the second cell 20 and farther away from the second side 102 than the second cell 20. The implementation of this embodiment makes it convenient to increase the distance between the connected eighth part 242 and fourth part 142 and other connected eighth part and fourth part 142, thereby facilitating the placement of the second electrode terminal 14 and the fourth electrode terminal 24, reducing the risk of mutual interference, and in turn, facilitating the connection between the second electrode terminal 14 and the fourth electrode terminal 24.

In some embodiments, referring to FIG. 6, both the fifth part 231 and the seventh part 241 protrude out of the second housing 21 from the second seal edge portion 212, and extend along the second direction Y. Along the second direction Y, the second cell 20 includes a third end 25 and a fourth end 26 opposite to each other. The third end 25 is closer to the first end 15 of the first cell 10 than the fourth end 26. Both the fifth part 231 and the seventh part 241 protrude out of the second housing 21 from the second seal edge portion 212 of the third end 25.

In some embodiments, the material of the fifth part 231 is the same as the material of the sixth part 232, and the material of the fifth part 231 is the same as the material of the negative electrode plate, so that the material of the third electrode terminal 23 is the same as the material of the negative electrode plate. The material of the seventh part 241 is the same as the material of the eighth part 242, and the material of the seventh part 241 is the same as the material of the positive electrode plate, so that the material of the fourth electrode terminal 24 is the same as the material of the positive electrode plate.

In some other embodiments, the material of the fifth part 231 is the same as the material of the sixth part 232, the fifth part 231 is connected to the positive electrode plate of the second electrode assembly 22, the material of the seventh part 241 is the same as the material of the eighth part 242, and the seventh part 241 is connected to the negative electrode plate of the second electrode assembly 22. In this way, the material of the third electrode terminal 23 is the same as the material of the positive electrode plate, and the material of the fourth electrode terminal 24 is the same as the material of the negative electrode plate. The fifth part 231 and the seventh part 241 protrude out of the second housing 21 from the second seal edge portion 212 of the fourth end 26.

In some embodiments, referring to FIG. 9, among one first cell 10 and one second cell 20 adjacent to the first cell 10 in the first direction X, along the second direction Y, a distance D1 between the fourth part 142 and the second housing 21 is greater than a distance D2 between the eighth part 242 and the second housing 21.

In some embodiments, referring to FIG. 9, among one first cell 10 and one second cell 20 adjacent to the first cell 10 in the first direction X, viewed along the second direction Y, the fourth part 142 covers at least a part of the eighth part 242. The fourth part 142 covers at least a part of the eighth part 242, thereby increasing the area of a junction between the fourth part 142 and the eighth part 242, and in turn, increasing the firmness of the connection between the second electrode terminal 14 and the fourth electrode terminal 24.

"One first cell 10 and one second cell 20 adjacent to the first cell 10 in the first direction X" may be understood as: among the one first cell 10 and one second cell 20 adjacent to each other, the second cell 20 is located on a side of the first cell 10, the side being away from the first side 101 along the first direction X.

In some embodiments, referring to FIG. 9, among one first cell 10 and one second cell 20 adjacent to the first cell 10 in a direction opposite to the first direction X, along the second direction Y, a distance D1 between the fourth part 142 and the second housing 21 is greater than a distance D2 between the eighth part 242 and the second housing 21.

"One first cell 10 and one second cell 20 adjacent to the first cell 10 in a direction opposite to the first direction X" may be understood as: among the one first cell 10 and one second cell 20 adjacent to each other, the second cell 20 is located on a side of the first cell 10, the side being away from the second side 102 in the first direction X.

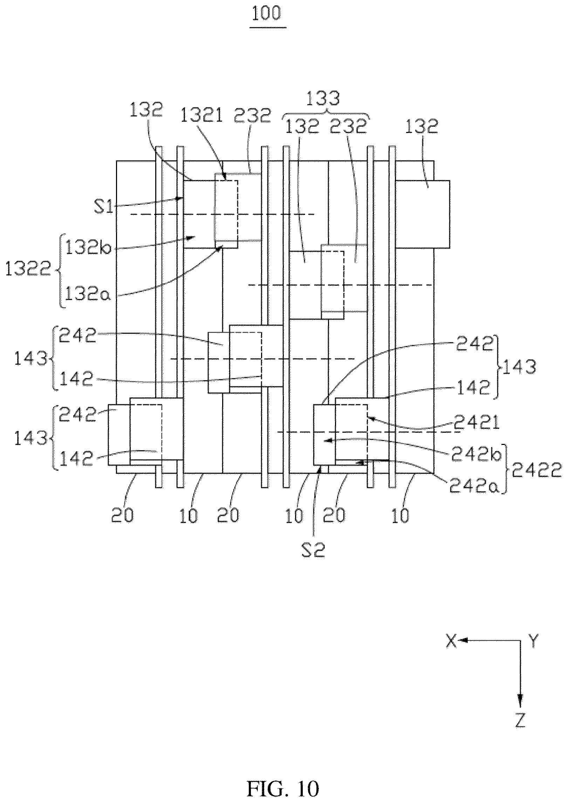

In some embodiments, referring to FIG. 10, viewed along the second direction Y, the eighth part 242 includes a first region 2421 covered by the fourth part 142 and an exposed second region 2422. Along the first direction X, when the length of the fourth part 142 is equal to the length of the eighth part 242, the fourth part 142 covers a part of the eighth part 242. The eighth part 242 includes the first region 2421 covered by the fourth part 142 and an exposed second region 2422, thereby facilitating equalization of the length of the fourth part 142 along the first direction X and the length of the eighth part 242 along the first direction X, improving structural consistency between the second electrode terminal 14 and the fourth electrode terminal 24, and in turn, facilitating the processing of the second electrode terminal 14 and the fourth electrode terminal 24.

In some embodiments, referring to FIG. 10, the second region 2422 includes a first sub-region 242a. The first sub-region 242a is located on a side of the first region 2421 in the third direction Z, so that the first sub-region 242a and the first region 2421 are arranged along the third direction Z. The third direction Z, the first direction X, and the second direction Y are perpendicular to each other. The disposed first sub-region 242a favorably supports the fourth part 142.

In some embodiments, referring to FIG. 10, the second region 2422 further includes a second sub-region 242b. The second sub-region 242b is located on a side of the first region 2421 in the first direction X, so that the second sub-region 242b is closer to the second side 102 than the first region 2421. The second sub-region 242b facilitates equalization of the length of the fourth part 142 along the first direction X and the length of the eighth part 242 along the first direction X, improving structural consistency between the second electrode terminal 14 and the fourth electrode terminal 24, and in turn, facilitating the processing of the second electrode terminal 14 and the fourth electrode terminal 24.

In some embodiments, referring to FIG. 8, among one second cell 20 and one first cell 10 adjacent to the second cell 20 in the first direction X, along the second direction Y, a distance D3 between the sixth part 232 and the second housing 21 is greater than a distance D4 between the second part 132 and the second housing 21.

In some embodiments, referring to FIG. 8, among one second cell 20 and one first cell 10 adjacent to the second cell 20 in the first direction X, viewed along the second direction Y, the sixth part 232 covers at least a part of the second part 132. The sixth part 232 covers at least a part of the second part 132, thereby increasing the area of a junction between the second part 132 and the sixth part 232, and in turn, increasing the firmness of the connection between the first electrode terminal 13 and the third electrode terminal 23.

"One second cell 20 and one first cell 10 adjacent to the second cell 20 in the first direction X" may be understood as: among the one second cell 20 and one first cell 10 adjacent to each other, the first cell 10 is located on a side of the second cell 20, the side being away from the first side 101 in the first direction X.

In some embodiments, referring to FIG. 8, among one second cell 20 and one first cell 10 adjacent to the second cell 20 in a direction opposite to the first direction X, along the second direction Y, a distance D3 between the sixth part 232 and the second housing 21 is greater than a distance D4 between the second part 132 and the second housing 21.

"One second cell 20 and one first cell 10 adjacent to the second cell 20 in a direction opposite to the first direction X" may be understood as: among the one second cell 20 and one first cell 10 adjacent to each other, the first cell 10 is located on a side of the second cell 20, the side being away from the first side 101 in the first direction X.

In some embodiments, referring to FIG. 10, the second part 132 includes a third region 1321 covered by the sixth part 232 and an exposed fourth region 1322. Along the first direction X, when the length of the second part 132 is equal to the length of the sixth part 232, the sixth part 232 covers a part of the second part 132. The second part 132 includes the third region 1321 covered by the sixth part 232 and an exposed fourth region 1322, thereby facilitating equalization of the length of the sixth part 232 along the first direction X and the length of the second part 132 along the first direction X, improving structural consistency between the third electrode terminal 23 and the first electrode terminal 13, and in turn, facilitating the processing of the third electrode terminal 23 and the first electrode terminal 13.

In some embodiments, referring to FIG. 10, the fourth region 1322 includes a third sub-region 132a. The third sub-region 132a is located on a side of the third region 1321 in the third direction Z, so that the third sub-region 132a and the third region 1321 are arranged along the third direction Z. The disposed third sub-region 132a favorably supports the sixth part 232.

In some embodiments, referring to FIG. 10, the fourth region 1322 further includes a fourth sub-region 132b. The fourth sub-region 132b is closer to the second side 102 than the third region 1321. The fourth sub-region 132b facilitates equalization of the length of the sixth part 232 along the first direction X and the length of the second part 132 along the first direction X, improving structural consistency between the third electrode terminal 23 and the first electrode terminal 13, and in turn, facilitating the processing of the third electrode terminal 23 and the first electrode terminal 13.

In some embodiments, referring to FIG. 10, the area S1 of the fourth sub-region 132b is greater than the area S2 of the second sub-region 242b. Along the first direction X, when the second part 132, the fourth part 142, the sixth part 232, and the eighth part 242 are of the same length, the area S1 of the fourth sub-region 132b is greater than the area S2 of the second sub-region 242b. Setting the area S1 of the fourth sub-region 132b to be greater than the area S2 of the second sub-region 242b facilitates equalization of the lengths of the second part 132, the fourth part 142, the sixth part 232, and the eighth part 242 along the first direction X, improving structural consistency between the first electrode terminal 13, the second electrode terminal 14, the third electrode terminal 23, and the fourth electrode terminal 24, and in turn, enhancing the processing efficiency of the first electrode terminal, the second electrode terminal 14, the third electrode terminal 23, and the fourth electrode terminal 24. In addition, the area of the second sub-region 242b is less than the area of the fourth sub-region 132b, thereby increasing the area available on the eighth part 242 for supporting the fourth part 142, increasing the area of a junction between the eighth part 242 and the fourth part 142, and in turn, increasing the firmness of the connection between the second electrode terminal 14 and the fourth electrode terminal 24.

In some embodiments, referring to FIG. 9, among one first cell 10 and one second cell 20 adjacent to the first cell 10 in the first direction X, a part of the fourth part 142 is apart from the eighth part 242, thereby facilitating separation of the third part 141 from the eighth part 242, and in turn, reducing the risk that the third part 141 touches and abrades the second seal edge portion 212, and reducing the risk that the eighth part 242 touches and abrades the first seal edge portion 112.

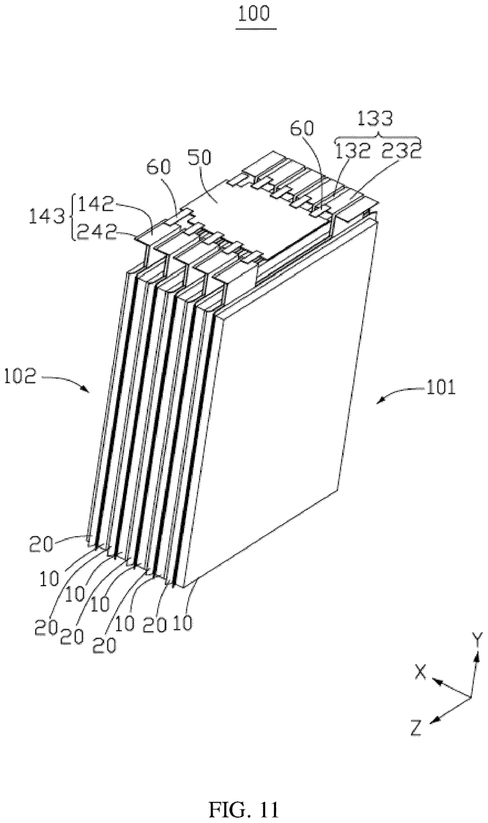

In some embodiments, referring to FIG. 10 and FIG. 11, the second part 132 of one first cell 10 is connected to the sixth part 232 of one adjacent second cell 20 to form a first connecting portion 133, and the fourth part 142 of one first cell 10 is connected to the eighth part 242 of one adjacent second cell 20 to form a second connecting portion 143.

In some embodiments of this application, referring to FIG. 11, the battery module 100 further includes a circuit board 50 and a plurality of connecting terminals 60 connected to the circuit board 50. The circuit board 50 is located between the first connecting portion 133 and the second connecting portion 143. Each first connecting portion 133 is connected to one of the connecting terminals 60, and each second connecting portion 143 is connected to one of the connecting terminals 60. The circuit board 50 is connected to the first connecting portion 133 and the second connecting portion 143 through a plurality of connecting terminals 60, thereby reducing the size of the circuit board 50, reducing the overall weight of the battery module 100, saving the material cost, and reducing the difficulty of assembling the circuit board 50.

In an embodiment provided with a first shell portion 30 and a second shell portion 40, the circuit board 50 is located inside the accommodation cavity 34.

In some embodiments, the circuit board 50 is a BMS (Battery Management System, battery management system) board. The BMS board can collect parameters such as voltage and resistance of a plurality of first cells 10 and a plurality of second cells 20, so as to monitor the running status of the plurality of first cells 10 and the plurality of second cells 20, thereby improving the reliability of the battery module 100.

In some embodiments, referring to FIG. 2, the circuit board 50 is further connected to a first terminal 51 and a second terminal 52. The first terminal 51 and the second terminal 52 are of opposite polarities. The battery module further includes a peripheral component 53. The peripheral component 53 is mounted to the first shell portion 30 or the second shell portion 40. The peripheral component 53 is electrically connected to the first terminal 51 and the second terminal 52 and at least partially exposed outside the accommodation cavity 34, so as to be configured to electrically connect the battery module 100 to an external load.

In some embodiments, structures such as a current collecting plate connected to the circuit board 50 may be further disposed inside the accommodation cavity, without being particularly limited herein.

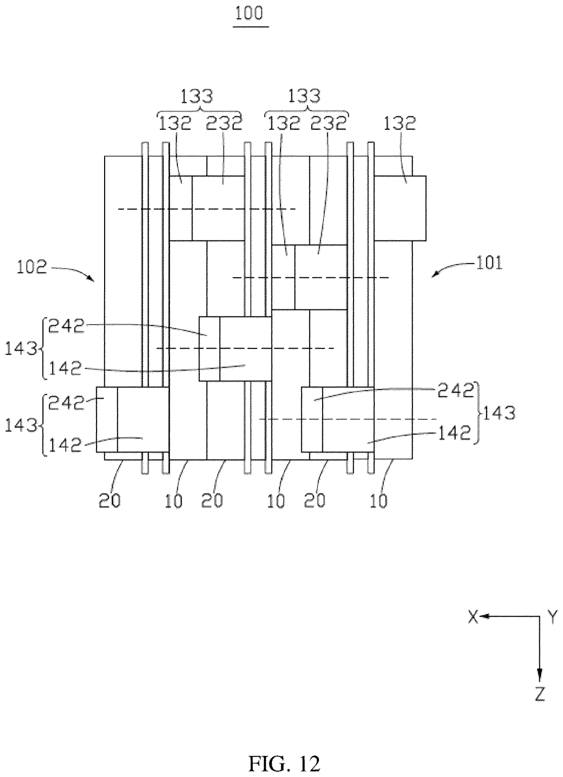

In some embodiments, referring to FIG. 12, a symmetry axis of one first connecting portion 133 extending along the first direction X is apart from a symmetry axis of another first connecting portion 133 extending along the first direction X, thereby facilitating the placement of the first electrode terminal 13 and the third electrode terminal 23.

In some embodiments, referring to FIG. 12, viewed along the first direction X, one first connecting portion 133 is apart from another first connecting portion 133, thereby further reducing the risk of mutual interference between the first electrode terminal 13 and the third electrode terminal 23.

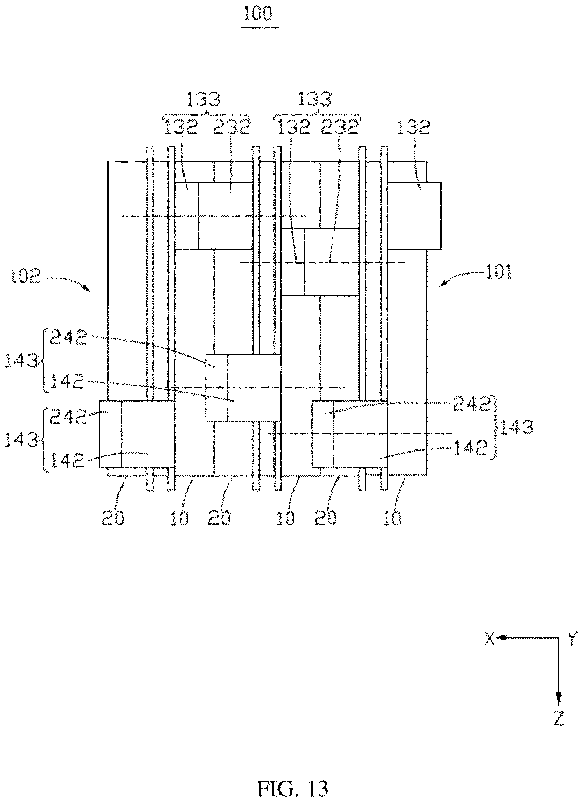

In some embodiments, referring to FIG. 13, viewed along the first direction X, one first connecting portion 133 at least partially overlaps another first connecting portion 133, thereby reducing the space occupied by each first connecting portion 133 in the third direction Z.

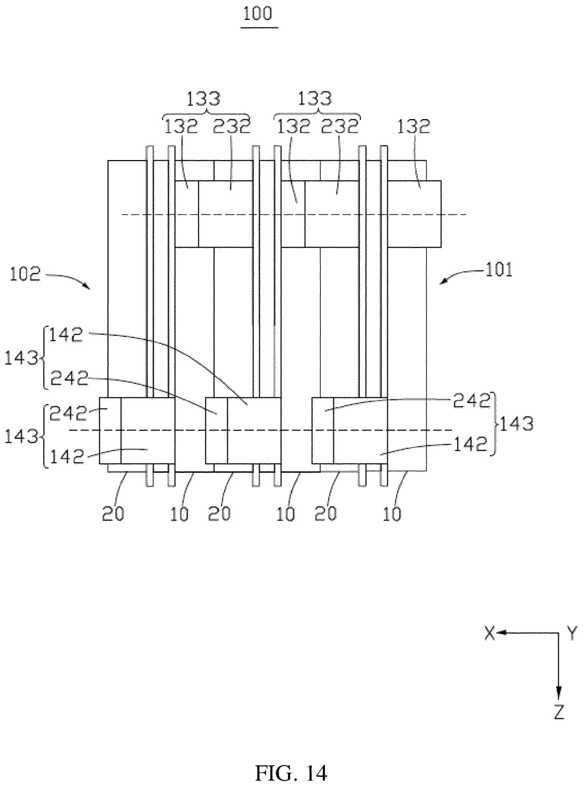

In some embodiments, referring to FIG. 14, a symmetry axis of one first connecting portion 133 extending along the first direction X coincides with a symmetry axis of another first connecting portion 133 extending along the first direction X, thereby reducing the space occupied by each first connecting portion 133 in the third direction Z.

In some embodiments, referring to FIG. 12, a symmetry axis of one second connecting portion 143 extending along the first direction X is apart from a symmetry axis of another second connecting portion 143 extending along the first direction X, thereby facilitating the placement of the second electrode terminal 14 and the fourth electrode terminal 24.

In some embodiments, referring to FIG. 12, viewed along the first direction X, one second connecting portion 143 is apart from another second connecting portion 143, thereby further reducing the risk of mutual interference between the second electrode terminal 14 and the fourth electrode terminal 24.

In some embodiments, referring to FIG. 13, viewed along the first direction X, one second connecting portion 143 at least partially overlaps another second connecting portion 143, thereby reducing the space occupied by each second connecting portion 143 in the third direction Z.

In some embodiments, referring to FIG. 14, a symmetry axis of one second connecting portion 143 extending along the first direction X coincides with a symmetry axis of another second connecting portion 143 extending along the first direction X, thereby reducing the space occupied by each second connecting portion 143 in the third direction Z.

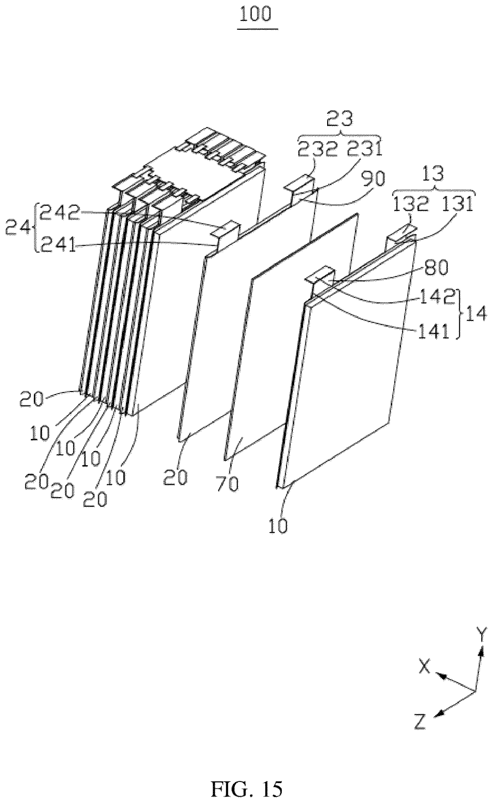

In some embodiments of this application, referring to FIG. 15, at least one structural component 70 is disposed between any one first cell 10 and one second cell 20 adjacent to the first cell 10 in the first direction X. Any one first cell 10 is in contact with one second cell 20 adjacent to the first cell 10 in a direction opposite to the first direction X. Compared with the technical solution in which foam is disposed between any adjacent first cell 10 and second cell 20, this embodiment makes it convenient to omit the structural component 70 between any one first cell 10 and one second cell 20 adjacent to the first cell 10 in a direction opposite to the first direction X, thereby reducing the overall size of the battery module 100 in contrast to the practice in which a structural component 70 is disposed between any adjacent first cell 10 and second cell 20.

In some embodiments, the structural component 70 may be foam, insulation adhesive, silicone blocks, or the like.

In some embodiments, referring to FIG. 15, along the first direction X, a first insulation layer 80 is disposed between any one third part 141 and one seventh part 241 adjacent to the third part 141 along a direction opposite to the first direction X. The first insulation layer 80 reduces the risk of a short circuit caused by the contact of the first electrode terminal 13 and the third electrode terminal 23 that are apart from each other.

In some embodiments, referring to FIG. 15, the first insulation layer 80 is connected to the third part 141. In some other embodiments, the first insulation layer 80 is connected to the seventh part 241.

In some embodiments, referring to FIG. 15, a second insulation layer 90 is disposed between any one fifth part 231 and one first part 131 adjacent to the fifth part 231 along a direction opposite to the first direction X. The second insulation layer 90 reduces the risk of a short circuit caused by the contact of the second electrode terminal 14 and the fourth electrode terminal 24 that are apart from each other.

In some embodiments, referring to FIG. 15, the second insulation layer 90 is connected to the fifth part 231. In some other embodiments, the second insulation layer 90 is connected to the first part 131.

In some embodiments, the first insulation layer 80 and the second insulation layer 90 may be an insulation adhesive.

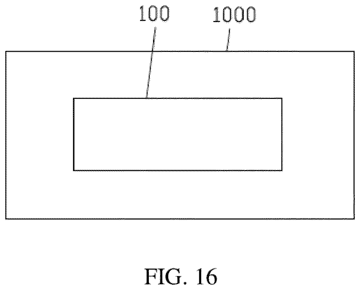

Referring to FIG. 16, an embodiment of this application further provides an electrical device 1000. The electrical device 1000 includes the battery module 100 disclosed in any one of the foregoing embodiments. The difficulty of connecting the battery module 100 is reduced, and the demand for foam is decreased, thereby facilitating miniaturization of the electrical device 1000.

It is hereby noted that the electrical device 1000 employs the technical solution disclosed in any one of the embodiments of the battery module 100, and therefore, achieves at least the beneficial effects brought by the technical solution in any one of the embodiments of the battery module 100, the details of which are omitted here.

The electrical device 1000 may be a mobile phone, a laptop computer, an unmanned aerial vehicle, an electric two-wheeler, a cleaning robot, an energy storage device, an electric tool, or the like.

In addition, a person of ordinary skill in the art understands that the foregoing embodiments are merely intended to illustrate this application, but not intended to limit this application. Any and all appropriate modifications and changes made to the embodiments without departing from the spirit and conception of this application still fall within the protection scope of this application.

## Claims

1. A battery module(100), comprising a plurality of first cells(10) and a plurality of second cells(20) arranged alternately along a first direction(X), wherein the battery module has a first side(101) and a second side(102) opposite to each other along the first direction(X);
each first cell(10) comprises:
a first housing(11);
a first electrode assembly(12), disposed in the first housing(11);
a first electrode terminal(13), comprising a first part(131) and a second part(132) connected to each other, wherein the first part(131) is connected to the first electrode assembly(12); the first part(131) protrudes out of the first housing(11) from a part of the first cell(10), the part of the first cell(10) being away from the first side(101); the first part(131) extends along a second direction(Y) perpendicular to the first direction(X); and, along the first direction(X), the second part(132) extends toward the first side(101) from the first part(131);
a second electrode terminal(14), comprising a third part(141) and a fourth part(142) connected to each other, wherein the third part(141) is connected to the first electrode assembly(12); the third part(141) protrudes out of the first housing(11) from an other part of the first cell(10), the other part of the first cell(10) being away from the first side(101); the third part(141) extends along the second direction(Y); and, along the first direction(X), the fourth part(142) extends toward the second side(102) from the third part(141);
each second cell(20) comprises:
a second housing(21);
a second electrode assembly(22), disposed in the second housing(21);
a third electrode terminal(23), comprising a fifth part(231) and a sixth part(232) connected to each other, wherein the fifth part(231) is connected to the second electrode assembly(22); the fifth part(231) protrudes out of the second housing(21) from a part of the second cell(20), the part of the second cell(20) being away from the second side(102); the fifth part(231) extends along the second direction(Y); and, along the first direction(X), the sixth part(232) extends toward the second side(102) from the fifth part(231), and is connected to a second part(132) of an adjacent first cell(10) and the adjacent first cell(10) being farther away from the first side(101) than the second cell(20); and
a fourth electrode terminal(24), comprising a seventh part(241) and an eighth part(242) connected to each other, wherein the seventh part(241) is connected to the second electrode assembly(22); the seventh part(241) protrudes out of the second housing(21) from an other part of the second cell(20), the other part of the second cell(20) being away from the second side(102); the seventh part(241) extends along the second direction(Y); and, along the first direction(X), the eighth part(242) extends toward the second side(102) from the seventh part(241), and is connected to a fourth part(142) of an other adjacent first cell(10) and the other adjacent first cell(10) being farther away from the second side(102) than the second cell(20).

2. The battery module(100) according to claim 1, wherein, among any one first cell(10) and one second cell(20) adjacent to the one first cell(10) in the first direction(X), along the second direction(Y), a distance between the fourth part(142) and the second housing(21) is greater than a distance between the eighth part(242) and the second housing(21); and, viewed along the second direction(Y), the fourth part(142) covers at least a part of the eighth part(242).

3. The battery module(100) according to claim 2, wherein, viewed along the second direction(Y), the eighth part(242) comprises a first region(2421) covered by the fourth part(142) and an exposed second region(2422).

4. The battery module(100) according to claim 3, wherein, the second region(2422) comprises a first sub-region(242a), the first sub-region(242a) and the first region(2421) are arranged along a third direction(Z), and the third direction(Z), the first direction(X), and the second direction(Y) are perpendicular to each other.

5. The battery module(100) according to claim 4, wherein, the second region(2422) further comprises a second sub-region(242b), and, along the first direction(X), the second sub-region(242b) is closer to the second side(102) than the first region(2421).

6. The battery module(100) according to claim 5, wherein, among any one second cell(20) and one first cell(10) adjacent to the one second cell(20) in the first direction(X), along the second direction(Y), a distance between the sixth part(232) and the second housing(21) is greater than a distance between the second part(132) and the second housing(21); and
viewed along the second direction(Y), the sixth part(232) covers at least a part of the second part(132).

7. The battery module(100) according to claim 6, wherein, the second part(132) comprises a third region(1321), an exposed third sub-region(132a) and an exposed fourth sub-region(132b); the third region(1321) is covered by the sixth part(232); the third sub-region(132a) and the third region(1321) are arranged along the third direction(Z); along the first direction(X), the fourth sub-region(132b) is closer to the second side(102) than the third region(1321); and an area of the fourth sub-region(132b) is greater than an area of the second sub-region(242b).

8. The battery module(100) according to claim 5, wherein, viewed along the second direction(Y), the sixth part(232) covers at least a part of the second part(132); the second part(132) comprises a third region(1321) covered by the sixth part(232) and an exposed fourth sub-region(132b); along the first direction(X), the fourth sub-region(132b) is closer to the second side(102) than the third region(1321); and an area of the fourth sub-region(132b) is greater than an area of the second sub-region(242b).

9. The battery module(100) according to any one of claims 1 to 8, wherein, among any one first cell(10) and one second cell(20) adjacent to the first cell(10) in the first direction(X), a part of the fourth part(142) is apart from the eighth part(242).

10. The battery module(100) according to any one of claims 1 to 9, wherein, among any one second cell(20) and one first cell(10) adjacent to the second cell(20) in the first direction(X), along the second direction(Y), a distance between the sixth part(232) and the second housing(21) is greater than a distance between the second part(132) and the second housing(21); and, viewed along the second direction(Y), the sixth part(232) covers at least a part of the second part(132).

11. The battery module(100) according to claim 10, wherein, viewed along the second direction(Y), the second part(132) comprises a third region(1321) covered by the sixth part(232) and an exposed fourth region(1322).

12. The battery module(100) according to claim 11, wherein, the fourth region(1322) further comprises a fourth sub-region(132b), and the fourth sub-region(132b) is closer to the second side(102) than the third region(1321).

13. The battery module(100) according to any one of claims 1 to 12, wherein, the second part(132) of one first cell(10) is connected to the sixth part(232) of one adjacent second cell(20) to form a first connecting portion(133), and the fourth part(142) of one first cell(10) is connected to the eighth part(242) of one adjacent second cell(20) to form a second connecting portion(143);
a symmetry axis of one first connecting portion(133) extending along the first direction(X) coincides with a symmetry axis of another first connecting portion(133) extending along the first direction(X).

14. The battery module(100) according to claim 13, wherein, viewed along the first direction(X), one first connecting portion(133) at least partially overlaps another first connecting portion(133).

15. An electrical device(1000), wherein, the electrical device(1000) comprises the battery module(100) according to any one of claims 1 to 14.
